(19) **Europäisches Patentamt**
**European Patent Office**
**Office européen des brevets**

(11) **EP 3 791 532 B1**

(12) **EUROPEAN PATENT SPECIFICATION**

(45) Date of publication and mention
of the grant of the patent:
**01.10.2025   Bulletin 2025/40**

(21) Application number: **18731033.9**

(22) Date of filing: **08.06.2018**

(51) International Patent Classification (IPC):
**H04L 9/08** *(2006.01)*

(52) Cooperative Patent Classification (CPC):
**H04L 9/0852**

(86) International application number:
**PCT/EP2018/065118**

(87) International publication number:
**WO 2019/233591 (12.12.2019 Gazette 2019/50)**

(54) **TRANSMITTER AND RECEIVER FOR TRANSMITTING AND RECEIVING A QUANTUM KEY USING A PILOT SIGNAL**

SENDER UND EMPFÄNGER ZUM SENDEN UND EMPFANGEN EINES QUANTENSIGNALS

ÉMETTEUR ET RÉCEPTEUR POUR TRANSMETTRE ET RECEVOIR UN SIGNAL QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.03.2021   Bulletin 2021/11**

(73) Proprietor: **Huawei Technologies Duesseldorf GmbH**
**40549 Düsseldorf (DE)**

(72) Inventors:
• **WANG, Dawei**
**80992 Munich (DE)**
• **HILLERKUSS, David**
**80992 Munich (DE)**
• **HUMER, Gerhard**
**1210 Vienna (AT)**

(74) Representative: **Maiwald GmbH**
**Engineering**
**Elisenhof**
**Elisenstrasse 3**
**80335 München (DE)**

(56) References cited:
• **F LAUDENBACH ET AL: "Pilot-Disciplined CV-QKD with True Local Oscillator", 1 January 2017 (2017-01-01), XP055560768, Retrieved from the Internet <URL:http://2017.qcrypt.net/wp-content/uploads/2017/09/Mo33.pdf> [retrieved on 20190222]**
• **FABIAN LAUDENBACH ET AL: "Pilot-assisted intradyne reception for high-speed continuousvariable quantum key distribution with true local oscillator", ARXIV, 29 December 2017 (2017-12-29), XP055516084, Retrieved from the Internet <URL:https://arxiv.org/pdf/1712.10242v2.pdf> [retrieved on 20181016]**
• **SCHRENK B ET AL: "High-Rate Continuous-Variables Quantum Key Distribution with Piloted-Disciplined Local Oscillator", 2017 EUROPEAN CONFERENCE ON OPTICAL COMMUNICATION (ECOC), IEEE, 17 September 2017 (2017-09-17), pages 1 - 3, XP033336337, DOI: 10.1109/ECOC.2017.8345964**
• **BING QI ET AL: "Generating the Local Oscillator "Locally" in Continuous-Variable Quantum Key Distribution Based on Coherent Detection", PHYSICAL REVIEW X, vol. 5, no. 4, 1 October 2015 (2015-10-01), XP055316967, DOI: 10.1103/PhysRevX.5.041009**

EP 3 791 532 B1

- **DANIEL B.?S. SOH ET AL: "Self-Referenced Continuous-Variable Quantum Key Distribution Protocol", PHYSICAL REVIEW X, vol. 5, no. 4, 1 October 2015 (2015-10-01), XP055316963, DOI: 10.1103/PhysRevX.5.041010**
- **"Quantum Key Distribution (QKD); Components and Internal Interfaces", vol. ISG QKD Quantum Key Distribution, no. V0.0.3, 4 June 2017 (2017-06-04), pages 1 - 49, XP014303537, Retrieved from the Internet <URL:docbox.etsi.org/ISG/QKD/70-Drafts/ 0003ed2/QKD-003ed2v003.pdf> [retrieved on 20170604]**

## Description

### TECHNICAL FIELD

The present invention generally relates to the field of communication network technology. Particularly, the invention relates to Quantum Key Distribution.

### BACKGROUND

Quantum key distribution (QKD) is based on quantum carriers, also referred to as quantum signals, typically single-photon or strongly attenuated light pulses, for sharing a secret electronic key. A sequence of such light pulses, i.e. quantum signals, is transmitted from a transmitter via a quantum channel to a receiver. Each light pulse encodes a key bit. The quantum properties of light, in particular the Heisenberg uncertainty principle, ensure that these key bits cannot be read without disturbing the quantum state of the photons. Public communications over an additional classical channel are then used to estimate the maximum amount of information that a potential eavesdropper may have acquired, and to distil a secret key out of the raw data.

A major issue encountered in communication systems in general and in QKD in particular is how to recover the original information sent by the sender from the received signal when the received signal has been distorted compared to the originally sent signal. There are many techniques for solving this problem, one of the most important ones is carrier and clock synchronization.

In one of the QKD methods, the quantum signal is received via digital coherent detection using a laser as a local oscillator, a photodetector, and an analog-to-digital convertor. The local oscillator at the receiver does not have exactly the same frequency and phase as the sender's local oscillator. This leads to an undesired phase shift of the received quantum signal. Furthermore, the analog-to-digital convertor at the receiver side has a sampling clock different from the clock of the transmitter. Therefore, the sampling by the analog-to-digital convertor will cause timing errors in the received quantum signal.

F Laudenbach ET AL: "Pilot-Disciplined CV-QKD with True Local Oscillator", 1 January 2017 (2017-01-01), XP055560768, describes a pilot-assisted coherent intradyne reception methodology for CV-QKD with true local oscillator.

Fabian Laudenbach ET AL: "Pilot-assisted intradyne reception for high-speed continuousvariable quantum key distribution with true local oscillator", Arxiv, 29 December 2017 (2017-12-29), XP055516084, describes a pilot-assisted coherent intradyne reception methodology for CV-QKD with true local oscillator.

SCHRENK B ET AL: "High-Rate Continuous-Variables Quantum Key Distribution with Piloted-Disciplined Local Oscillator", 2017 EUROPEAN CONFERENCE ON OPTICAL COMMUNICATION (ECOC), IEEE, 17 September 2017 (2017-09-17), pages 1-3, XP033336337, DOI: 10.1109/ECOC.2017.8345964, describes a pilot-disciplined coherent intradyne reception methodology for 250 Mbau CV-QKD with frequency/-Phase-matched local oscillator.

"Quantum Key Distribution (QKD); Components and Internal Interfaces", ETSI DRAFT SPECIFICATION; QKD 003, EUROPEAN ELECOMMUNICATIONS STANDARDS INSTITUTE (ETSI), 650, ROUTE DES LUCIOLES; F-06921 SOPHIA-ANTIPOLIS; FRANCE vol. ISG QKD Quantum Key Distribution, no. V0.0.3 4 June 2017 (2017-06-04), pages 1-49, XP014303537, describes a specification for components and internal interfaces in quantum key distribution.

### SUMMARY

Having recognized the above-mentioned disadvantages and problems, the invention aims at improving the state of the art. In particular, an object of the invention is to provide an improved transmitter for transmitting a quantum signal, an improved receiver for receiving a quantum signal and improved methods for transmitting and receiving a quantum signal. It is an object of the invention to address above-mentioned issues, e.g., to remove the random phase shift and timing error from the received quantum signal.

This object is achieved by the features of the independent claims. Further embodiments of the invention are apparent from the dependent claims, the description and the figures.

According to a first aspect, the invention relates to a transmitter that is configured to generate an optical signal. The optical signal comprises a quantum signal. The transmitter comprises opto-electronic circuitry configured to generate the optical signal by generating a quantum signal. The opto-electronic circuitry is configured to generate the optical signal by generating a pilot signal, wherein the pilot signal is modulated by a clock signal. The opto-electronic circuitry is configured to generate the optical signal by modulating an optical carrier based on the quantum signal and the pilot signal.

Thus a transmitter for transmitting a quantum signal and a modulated pilot signal is provided. This has the advantage that the phase shift of the optical signal that may be caused by the optical medium can be estimated by the receiver.

The pilot signal is a single-frequency signal that is amplitude-modulated by the clock signal.

Thus; the modulation of the pilot signal is defined in more detail.

This form of modulation has the advantage that the modulation and demodulation can be performed by simple means.

The pilot signal is a single-frequency signal with a frequency that is an integer multiple of the frequency of the clock signal. The clock signal is a continuous stable jitter-free clock frequency.

This form of the pilot signal has the advantage that it enables a receiver to use the clock signal to generate a reference signal that has the same frequency as the pilot signal.

According to a second aspect, the invention relates to a method for providing an optical signal for transmitting a quantum signal. The method comprises generating a quantum signal. The method comprises generating a pilot signal, the pilot signal is modulated by a clock signal. The method comprises modulating an optical carrier based on the pilot signal and the quantum signal for providing the optical signal.

Thus a method for transmitting a quantum signal and a modulated pilot signal is described. This method has the advantage that the phase shift caused by the optical medium can be estimated by the receiver.

The pilot signal is a single-frequency signal that is amplitude-modulated by the clock signal.

The modulation and demodulation can thus be performed by simple means.

The pilot signal is a single-frequency signal with a frequency that is an integer multiple of the frequency of the clock signal. The clock signal is a continuous stable jitter-free clock frequency

A receiver is thus enabled to use the clock signal to generate a reference signal that has the same frequency as the pilot signal.

According to a third aspect, the invention relates to a receiver configured to receive an optical signal comprising a quantum signal and a pilot signal. The pilot signal is modulated by a clock signal. The receiver comprises opto-electronic circuitry configured to extract the quantum signal and the pilot signal from the optical signal. The opto-electronic circuitry is configured to extract the clock signal from the extracted pilot signal. The opto-electronic circuitry is configured to phase-correct the extracted quantum signal based on the extracted clock signal and the extracted pilot signal. The pilot signal is a single-frequency tone signal that is amplitude-modulated by the clock signal. The pilot signal is a single-frequency signal with a frequency that is an integer multiple of the frequency of the clock signal. The clock signal is a continuous stable jitter-free clock frequency.

Thereby, the phase shift caused by the transmission medium can be eliminated. This has the advantage that the information carried by the quantum signal can be obtained in a reliable manner.

According to an implementation of the third aspect, the pilot signal is a single-frequency signal and the opto-electronic circuitry is configured to phase-correct the extracted quantum signal based on the extracted clock signal and the phase of the extracted pilot signal.

This has the advantage that the phase shift of the quantum signal can be corrected.

According to an implementation of the third aspect, the opto-electronic circuitry is configured to down-sample the extracted pilot signal based on the extracted clock signal. The opto-electronic circuitry is configured to sample the extracted quantum signal based on the extracted clock signal. The opto-electronic circuitry is configured to phase-correct the sampled quantum signal based on the sampled pilot signal.

Thereby, an embodiment with analog clock recovery, under-sampling of the pilot-tone and digital phase recovery is provided. Hardware requirements can thus be reduced.

According to an implementation of the third aspect, the opto-electronic circuitry is configured to sample a phase difference between the extracted pilot signal and a reference signal based on the extracted clock signal. The opto-electronic circuitry is configured to generate a reference signal based on the extracted clock signal, wherein a phase of the reference signal is locked to a phase of the extracted clock signal. The opto-electronic circuitry is configured to phase-correct the extracted quantum signal by sampling the extracted quantum signal based on the extracted clock signal. The opto-electronic circuitry is configured to phase-correct the sampled quantum signal based on the sampled phase difference.

Thereby, an embodiment with analog clock recovery, analog phase detection and analog / digital phase recovery is provided. Compared to digital processing, this has the advantage of achieving higher data throughput.

According to an implementation of the third aspect, the opto-electronic circuitry is configured to generate a reference signal based on the extracted clock signal, the reference signal having a same frequency as the pilot signal. The opto-electronic circuitry is configured to down-convert each of an I component and a Q component of the extracted pilot signal by mixing each of the I component and the Q component with the reference signal. The opto-electronic circuitry is configured to phase-correct the extracted quantum signal based on the down-converted I component and the down-converted Q component.

Thereby, an embodiment with analog clock recovery, analog phase detection and analog phase recovery is provided. Compared to digital processing, this has the advantage of achieving higher data throughput.

According to an implementation of the third aspect, the opto-electronic circuitry is configured to extract the clock signal by demodulating the pilot signal and low pass filtering the demodulated pilot signal.

The clock signal provided by the transmitter is thus recovered by the receiver in a robust manner.

According to an implementation of the third aspect, the opto-electronic circuitry is configured to demodulate the pilot signal by amplitude-demodulating the pilot signal.

Thereby, the pilot signal is demodulated in an efficient and simple manner.

According to an implementation of the third aspect, the opto-electronic circuitry is further configured to reduce jitter of the extracted clock signal.

**In** other words, the clock recovery may include reduction of jitter. This has the advantage that the sampling of the signals is more precise.

According to a fourth aspect, the invention relates to a method for receiving an optical signal comprising a quantum signal and a pilot signal, the pilot signal is modulated by a clock signal. The method comprises extracting the quantum signal and the pilot signal from the optical signal. The method comprises extracting the clock signal from the extracted pilot signal. The method comprises phase-correcting the extracted quantum signal based on the extracted clock signal and the extracted pilot signal. The pilot signal is a single-frequency tone signal that is amplitude-modulated by the clock signal. The pilot signal is a single-frequency signal with a frequency that is an integer multiple of the frequency of the clock signal. The clock signal is a continuous stable jitter-free clock frequency.

Thereby, the phase shift caused by the transmission medium is eliminated. This has the advantage that the information carried by the quantum signal can be obtained.

According to an implementation of the fourth aspect, the pilot signal is a single-frequency tone signal and the method comprises phase-correcting the extracted quantum signal based on the extracted clock signal and the phase of the extracted pilot signal.

This has the advantage that the phase shift of the quantum signal can be corrected.

According to an implementation of the fourth aspect, the method further comprises down-sampling the extracted pilot signal based on the extracted clock signal. The method further comprises sampling the extracted quantum signal based on the extracted clock signal. The method further comprises phase-correcting the sampled quantum signal based on the sampled pilot signal.

Thereby, an embodiment with analog clock recovery, under-sampling of pilot-tone and digital phase recovery is provided. Hardware requirements can thus be reduced.

According to an implementation of the fourth aspect, the method further comprises sampling a phase difference between the extracted pilot signal and a reference signal based on the extracted clock signal. The method further comprises generating a reference signal based on the extracted clock signal, wherein a phase of the reference signal is locked to a phase of the extracted clock signal. The method further comprises phase-correcting the extracted quantum signal by sampling the extracted quantum signal based on the extracted clock signal. The method further comprises phase-correcting the sampled quantum signal based on the sampled phase difference.

Thus an embodiment with analog clock recovery, analog phase detection and analog / digital phase recovery is provided. This has the advantage of offloading the task from the DSP to analog devices to achieve higher data throughput.

According to an implementation of the fourth aspect, the method further comprises generating a reference signal based on the extracted clock signal, the reference signal having a same frequency as the pilot signal. The method further comprises down-converting each of an I component and a Q component of the extracted pilot signal by mixing each of the I component and the Q component with the reference signal. The method further comprises phase-correcting the extracted quantum signal based on the down-converted I component and the down-converted Q component.

Thereby, an embodiment with analog clock recovery, analog phase detection and analog phase recovery is provided. This has the advantage of offloading the task from the DSP to analog devices to achieve higher data throughput.

According to an implementation of the fourth aspect, the method further comprises extracting the clock signal by demodulating the pilot signal and low pass filtering the demodulated pilot signal.

Thereby, the clock signal is recovered in a robust manner. This has the advantage that the sampling clock is provided by the transmitter.

According to an implementation of the fourth aspect, the method further comprises demodulating the pilot signal by amplitude-demodulating the pilot signal.

The pilot signal is thus demodulated in an efficient and simple manner.

According to an implementation of the fourth aspect, the method further comprises reducing jitter of the extracted clock signal.

**In** other words, the clock recovery may include reduction of jitter. This has the advantage that the sampling of the signals is more precise.

According to a fifth aspect, the invention relates to a computer program having a program code for performing the method according to the second or fourth aspect, when the computer program runs on a computing device.

Thereby, the method can be performed in an automatic and repeatable manner. Advantageously, the computer program can be respectively performed at the transmitter according to the first aspect or at the receiver according to the third aspect.

More specifically, it should be noted that the above apparatuses, i.e., the transmitter and the receiver, may each be implemented as or comprise a discrete hardware circuitry (e.g., with discrete hardware components, integrated chips or arrangements of chip modules), or a signal processing device or chip controlled by a software routine or program stored in a memory, written on a computer-readable medium or downloaded from a network such as the internet. It shall further be understood that a preferred embodiment of the invention can also be any combination of the dependent claims or above embodiments with the respective independent claim.

These and other aspects of the invention will be apparent and elucidated with reference to the embodiments described hereinafter.

## BRIEF DESCRIPTION OF THE DRAWINGS

The above aspects and implementation forms of the invention will be explained in the following description of specific embodiments in relation to the enclosed drawings, in which:

Fig. 1 shows a block diagram of a transmitter according to an embodiment of the invention,
Fig. 2 shows an exemplary spectrum of the pilot signal and the quantum signal,
Fig. 3 shows an exemplary waveform of the amplitude-modulated pilot signal,
Fig. 4 shows a block diagram of a receiver according to an embodiment of the invention,
Fig. 5 shows an exemplary waveform of the extracted amplitude-modulated pilot signal,
Fig. 6 shows an exemplary waveform of the filtered extracted amplitude-modulated pilot signal,
Fig. 7 shows an exemplary waveform of the extracted clock signal,
Fig. 8 shows a block diagram of a receiver according to another embodiment of the invention,
Fig. 9 shows a block diagram of a receiver according to another embodiment of the invention,
Fig. 10 shows a circuit diagram of an analog phase correction block.

## DETAILED DESCRIPTION OF EMBODIMENTS OF THE INVENTION

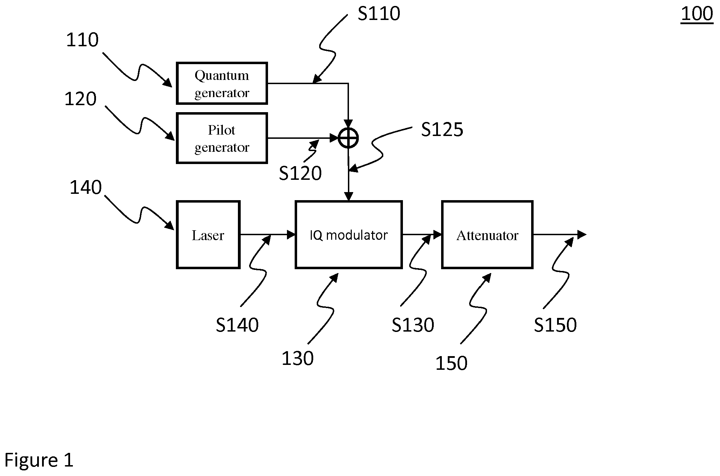

Fig. 1 shows a block diagram of transmitter 100 configured to generate an optical signal S150 according to an embodiment of the invention. The transmitter 100 comprises opto-electronic circuitry 110, 120, 140, 130, 150 configured to generate the optical signal S150 based on a quantum signal S110 and based on a pilot signal S120. Both the quantum signal S110 and the pilot signal S120 are electrical signals. The opto-electronic circuitry comprises a quantum generator 110 to generate the quantum signal. The opto-electronic circuitry comprises a pilot generator 120 to generate the pilot signal S120. The pilot signal S120 is modulated by a clock signal.

The optical signal is generated by modulating an optical carrier S140 based on the quantum signal S110 and the pilot signal S120. The optical carrier S140 may be generated by a Laser 140. The Laser 140 is also referred to as a local oscillator. The opto-electronic circuitry comprises I/Q modulator 130 to modulate the optical carrier S140 with an electrical input signal S125. The electrical input signal S125 comprises both the quantum signal S110 and the pilot signal S120 added together. The IQ modulator 130 may be a conventional IQ modulator. In a particular embodiment the IQ modulator 130 may be a dual-polarization (dual-pol) IQ modulator that modulates the quantum signal S110 and the pilot signal S120 to orthogonal polarizations of the optical carrier.

The output signal S130 of the I/Q modulator 130 is attenuated by attenuator 150 to form the optical signal S150. The attenuator is used to adjust the modulated carrier to a proper power level to meet the security requirement of the QKD system. The optical signal may be transmitted over fiber communication channel and may be received by a receiver 400, 800, 900.

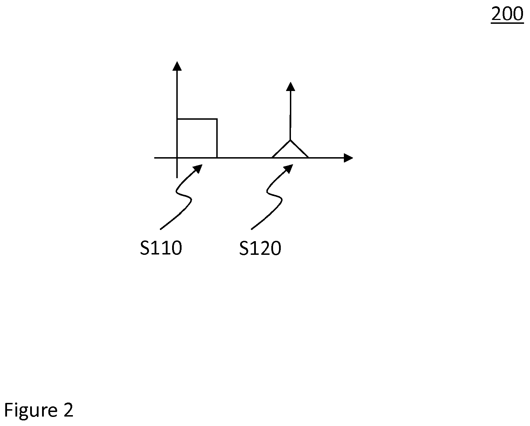

Fig. 2 shows the quantum signal S110 and the pilot signal S120 in the frequency domain. The quantum signal S110 may use a different frequency range than the pilot signal. In other words, the quantum signal S110 and the pilot signal S120 do not overlap in frequency. In an embodiment, the quantum signal S110 is at the lower frequency and the pilot signal S120 is at the higher frequency. In a particular embodiment, the quantum signal may be a baseband signal having a bandwidth of 50 MHz.

The pilot signal S120 may be a single-frequency signal that is amplitude-modulated by the clock signal and possibly modulated by one or more further signals. The pilot signal S120 may have a frequency that is an integer multiple of the frequency of the clock signal. The clock signal may be a continuous stable jitter-free clock frequency. In a particular embodiment, the frequency of the pilot signal may be 800MHz and the clock signal may have a frequency of 100 MHz. The pilot signal S120 is a complex baseband signal, i.e. it has both an in-phase (I) and a quadrature phase (Q) component.

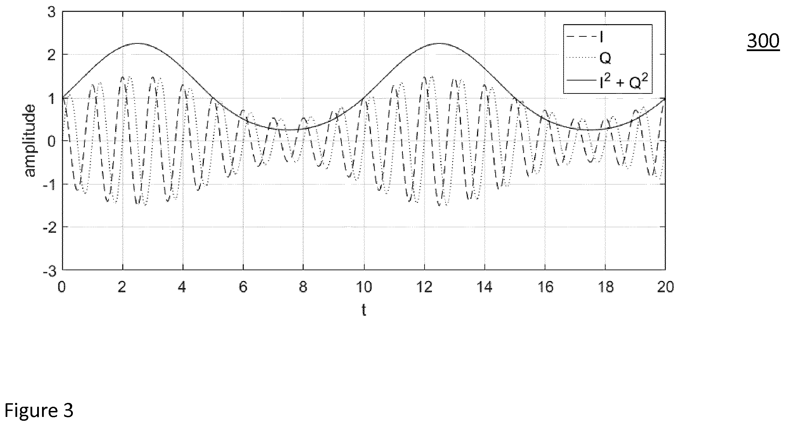

Fig. 3 shows an exemplary waveform 300 of the pilot signal S120. The in-phase (I) component of the pilot signal is depicted as dashed waveform. The quadrature phase (Q) component is depicted as dotted waveform. The power of pilot signal S120 can be expressed as

$$P = I^2 + Q^2$$

and is depicted in Fig. 3 as a solid line. The amplitude modulation with the clock signal makes the power P of the pilot signal S120 vary. The clock signal may be a single-frequency signal. This has the advantage that the pilot signal has a bandwidth of two times the frequency of the clock signal.

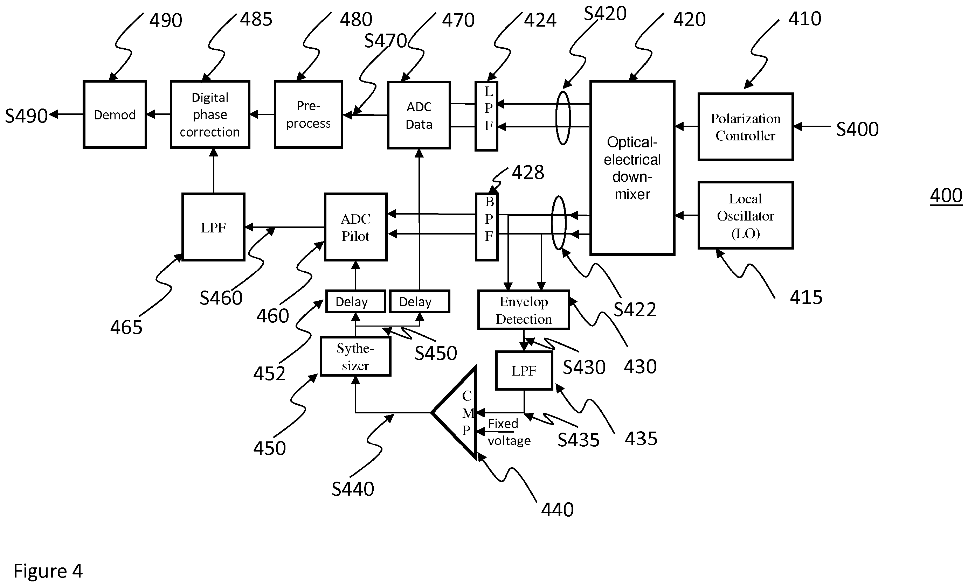

Fig. 4 shows a block diagram of a receiver 400 of an optical signal S400. The optical signal S400 may be the signal generated by transmitter 100 and comprises a quantum signal and a pilot signal. The pilot signal may be modulated by a clock signal and possibly modulated by one or more further signals. The pilot signal is frequency-separated from the quantum signal. Both the pilot signal and the quantum signal were passed through the same fiber. Therefore, the quantum signal and the pilot signal have the same random phase shift caused by the mismatch between the local oscillator (Laser) of the transmitter 100 and the receiver 400 of the QKD communication link. The phase shift can therefore be extracted from the pilot signal.

The particular receiver 400 applies an analog clock recovery based on the pilot signal and a digital phase correction. In particular, the pilot signal may be a sinusoidal signal that is amplitude-modulated by the clock signal and possibly modulated by one or more further signals.

The power of the received demodulated pilot signal is expected to be stable in frequency and phase. Therefore this information may be used for synchronization of the exact acquisition timing in the receiver 400. The pilot signal may have a frequency that is an integer multiple of the frequency of the clock signal. In a particular embodiment, the pilot signal may have a frequency of 800 MHz and the clock signal may have a frequency of 100 MHz.

The receiver 400 comprises opto-electronic circuitry for extracting the quantum signal S420 and the pilot signal S422 from the received optical signal S400.

The receiver 400 comprises opto-electronic circuitry for extracting a clock signal S450 from the extracted pilot signal S422 and to phase-correct the extracted quantum signal S420 based on the extracted clock signal S450 and the extracted pilot signal S422.

In more detail, the received signal S400 passes a polarization controller 410. The polarization controller aligns the polarization between the local oscillator 415 and the received optical signal S400. The output of the polarization controller 410 is received by an optical-electrical downmixer and is downmixed based on signal generated by a local oscillator 415.

In an embodiment, when the quantum signal and pilot signal has been modulated in two orthogonal polarizations, optical-electrical downmixer 420 may be a dual-pol optical hybrid downmixer. In another embodiment, when single polarization has been used, optical-electrical downmixer 420 may be a single-pol optical hybrid downmixer. Downmixer 420 performs coherent detection and provides two outputs. The signal at the first output comprises the extracted quantum signal S420 and the signal at the second output comprises the extracted pilot signal S422. Both the extracted quantum signal S420 and the extracted pilot signal S422 are complex signals.

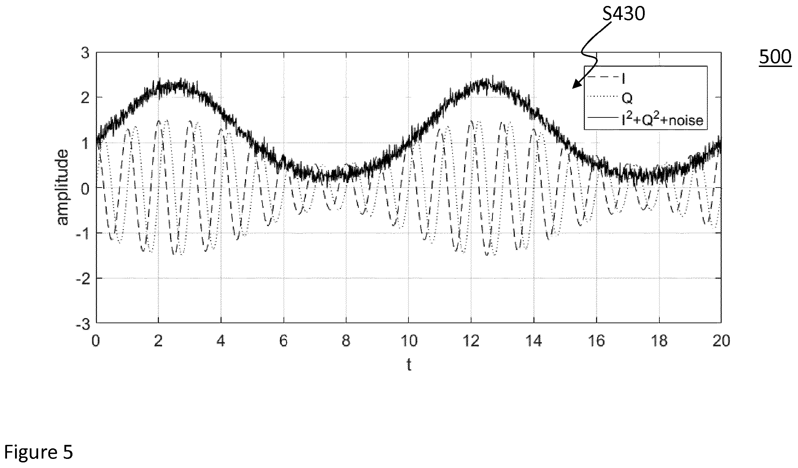

Envelope detector 430 determines the envelope signal S430 from the extracted pilot signal S422. In fact, the envelope detector 430 demodulates the amplitude-modulated pilot signal and the envelope signal S430 corresponds to the clock signal of transmitter but has been modified by the communication channel. An exemplary envelope signal S430 is depicted in Fig. 5.

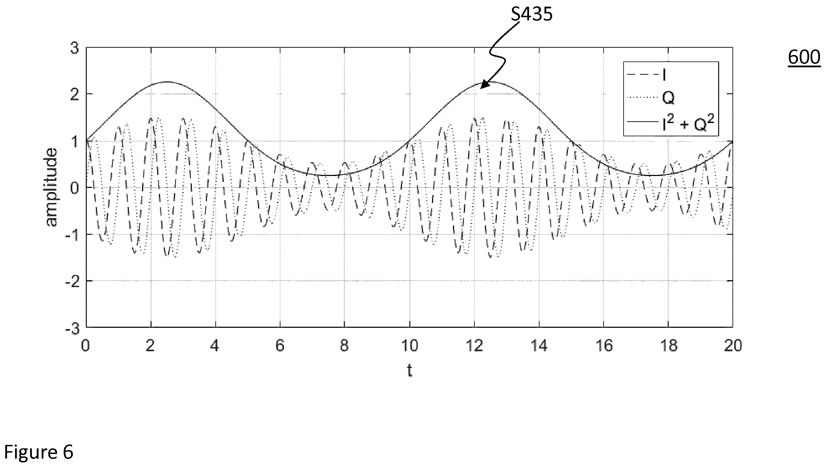

The envelope signal S430 is filtered by low pass filter 435 to reduce high frequency noise. An exemplary filtered envelope signal S435 is depicted in Fig. 6.

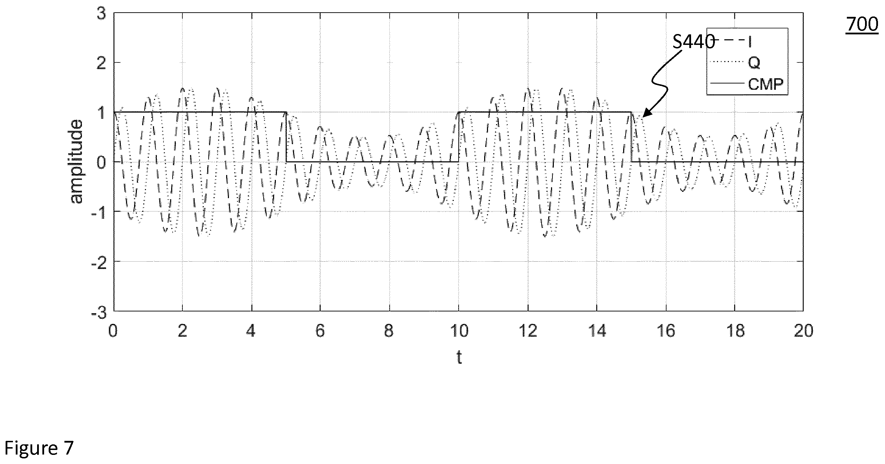

The resulting signal S435 is converted into a digital signal by a comparator 440. The comparator 440 has two inputs I+, I- and an output. The comparator 440 outputs a high level if the voltage of input I+ is larger than the voltage of input I-. Otherwise, the output of the comparator 440 outputs to a low level. The input I+ of comparator 440 may receive the filtered envelop signal S435. The input I- of comparator 440 may receive a fixed voltage, also referred to as a threshold voltage. Thus, the output S440 of comparator 440 is at high level as long as the voltage of filtered envelop signal S435 is larger than the threshold voltage. Otherwise, the output signal S440 of comparator 440 is at low level. Thereby, a digital version S440 of the envelope signal S435 is generated, as depicted exemplarily in Fig. 7.

After coherent detection of both the extracted quantum signal S420 and the extracted pilot signal S422 by optical downmixer 420 as described above, the pilot signal phase could be measured by sampling it according to the Nyquist criteria. However, this requires a very costly data acquisition system and a lot of digital signal processing power since the pilot signal has a high frequency. In fact, there is no need to recover the entire waveform of the pilot signal. Rather, it will be sufficient to obtain the pilot signal samples corresponding to the quantum signal samples, which is also referred to as down-sampling or under-sampling. The down-sampling technique reduces the hardware requirements but needs a very accurate sample clock that enables a precise triggering (i.e. precise sampling instants).

Signal S440 corresponds to the clock signal that has been used to generate the pilot signal at the transmitter, however, signal S440 may be subject to jitter due to the previous processing. The jitter is reduced by using the signal S440 as reference signal for a synthesizer 450. The output signal S450 of the synthesizer has very low jitter and is stable in frequency. In an embodiment, the synthesizer 450 may be a high performance synthesizer. In a particular embodiment, synthesizer 450 may be a Phase Locked Loop (PLL).

The low passed filtered and jitter-reduced signal S450 is also referred to as the extracted clock signal S450. The extracted clock signal S450 is the basis for sampling the extracted pilot signal S442 and the extracted quantum signal S420.

In this application, the statement "a signal A is sampled based on a signal B (or in accordance with a signal B)" means that the signal A is sampled at instants defined by the signal B.

The extracted pilot signal S442 is filtered by band pass filter 428 to remove unwanted frequency components and is then sampled by analog-to-digital converter 460 based on a delayed version of extracted clock signal S450 to generate digital pilot signal samples S460. The extracted quantum signal S420 filtered by low pass filter 424 to remove unwanted frequency components and then sampled by analog-to-digital converter 470 based on a delayed version of extracted clock signal S450 to generate digital quantum signal samples S470.

Inasmuch as the processing delay of the extracted quantum signal portion S420 and the extracted pilot signal portion S422 are different, a delay stage 452 aligns both the sampling trigger for the analog-to-digital converter 460 and the sampling trigger for analog-to-digital converter 470 such that optimized acquisition timing is selected. The sampling triggers correspond to the delayed versions of extracted clock signal S450 as described above. The delay of delay stage may be statistically calibrated. In an embodiment, there may be no need for a dynamic tuning.

In the digital domain, I and Q samples are combined into complex numbers. The quantum samples are expressed as

$$Q = Q_I + iQ_Q,$$

and the pilot samples as

$$P = P_I + iP_Q.$$

The pilot samples are further processed by another digital low pass filter to remove additional noise, and the output of that LPF is a smoothed version of pilot signal samples, which are used to correct the phase of quantum signal sample by sample. It has to be noted that some additional pre-processing will be carried out in pre-processing block 480 on the quantum samples before the phase correction. In an embodiment, the pre-processing may be one or more of matched filtering, frequency offset compensation or other processing.

The phase correction can be expressed as

$$Q'[n] = Q[n] \, P^*[n] \, / \, | \, P[n] \, |,$$

i.e., the quantum samples are multiplied with conjugated and normalized versions of corresponding pilot samples. The asterisk denotes the complex conjugation and || denotes the amplitude.

After phase correction, the quantum samples are ready to be demodulated by demodulator 480 to generate the raw quantum key signal S490.

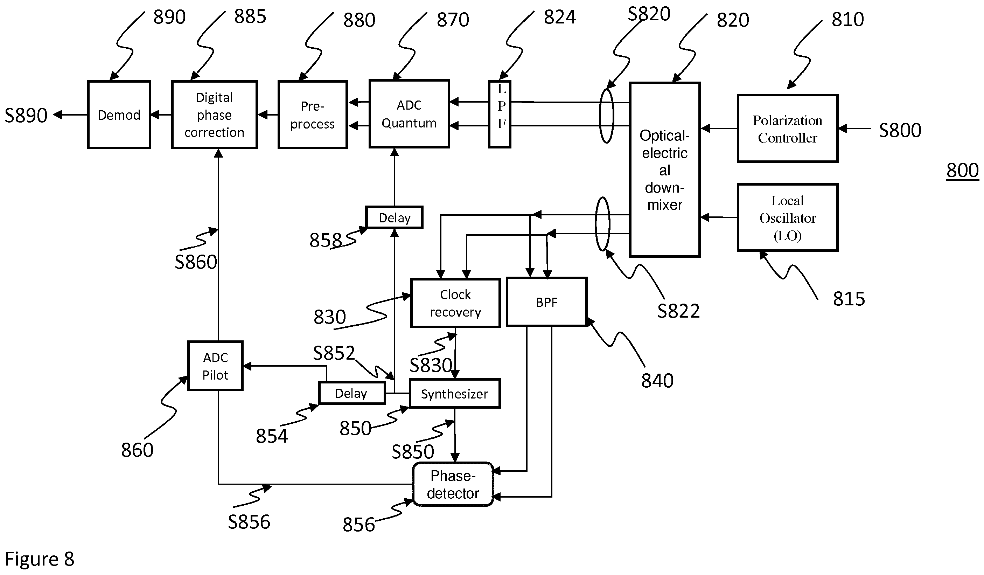

Fig. 8 depicts a block diagram of a receiver 800 for receiving an optical signal S800 according to another embodiment of the invention. The optical signal S800 may be the signal generated by transmitter 100 and comprises a quantum signal and a pilot signal. The pilot signal may be modulated by a clock signal and possibly modulated by one or more further signals. The pilot signal is frequency-separated from the quantum signal. Both the pilot signal and the quantum signal were passed through the same fiber. Therefore, the quantum signal and the pilot signal have the same random phase shift caused by the mismatch between the local oscillator (Laser) of the transmitter 100 and the receiver 800 of the QKD communication link. The phase shift can therefore be extracted from the pilot signal.

Unlike receiver 400, in receiver 800 the phase of the pilot signal is generated in an analog manner by using a recovered reference clock and a phase detector. The phase of the pilot signal is then sampled and used for phase correction of the quantum signal. This has the advantage of offloading the task from the DSP to analog devices to achieve higher data throughput.

In more detail, the received signal S800 passes a polarization controller 810. The polarization controller aligns the polarization between the local oscillator 815 and the received optical signal S800. The output of the polarization controller 810 is received by an optical-electrical downmixer and is downmixed based on signal generated by a local oscillator 815.

In an embodiment, when the quantum signal and pilot signal have been modulated in two orthogonal polarizations, optical-electrical downmixer 820 may be a dual-pol optical hybrid downmixer. In another embodiment, when single polarization has been used, optical-electrical downmixer 820 may be a single-pol optical hybrid downmixer. Downmixer 820 performs coherent detection and provides two outputs. The signal at the first output comprises the extracted quantum signal S820 and the signal at the second output comprises the extracted pilot signal S822. Both the extracted quantum signal S820 and the extracted pilot signal S822 are complex signals.

From the extracted pilot signal S822 a clock signal S830 is recovered by clock recovery circuit 830. In an embodiment, clock recovery circuit 830 may be an analog clock recovery circuit as in receiver 400 and comprises envelope detector 430, low pass filter 435 and comparator 440. The recovered clock signal S830 corresponds to the clock signal that has been used to modulate the pilot signal at the transmitter. The signal S830 is used as input signal for a synthesizer 850. Synthesizer 850 generates two output signals S850, S852. Signal S850 corresponds to the pilot signal and signal S852 corresponds to clock signal of the transmitter. Signal S852 is also referred to as the extracted clock signal. The pilot signal may have a frequency that is an integer multiple of the frequency of the clock signal. In a particular embodiment, the pilot signal may have a frequency of 800MHz and clock signal may have a frequency of 100 MHz.

Phase detector 856 determines the phase S856 of the pilot signal by comparing signal S850 from synthesiser 850 with a filtered version of the extracted pilot signal S822. The filtered version of the extracted pilot signal S822 is generated by band pass filter 840, which removes unwanted frequency components.

The extracted clock signal S852 is the basis for sampling the phase S856 of the extracted pilot signal S822 and the extracted quantum signal S820. Inasmuch as the processing delay of the extracted quantum signal portion S820 and the phase S856 of the extracted pilot signal S822 are different, a delay stage 852 and 858 aligns the sampling triggers for the analog-to-digital converter 860 and the sampling trigger for analog-to-digital converter 870 such that optimized acquisition timing is selected. The delay of delay stage may be statistically calibrated. In an embodiment, there may be no need for a dynamic tuning.

The extracted quantum signal S820 is filtered by low pass filter 424 to remove unwanted frequency components and is then sampled by analog-to-digital converter 870 based on the delayed version of the extracted clock signal S850 to generate digital quantum signal samples S870. In the digital domain, I and Q samples are combined into complex numbers. The quantum samples are expressed as

$$Q = Q_I + iQ_Q.$$

It has to be noted that some additional pre-processing will be carried out in pre-processing block 880 on the quantum samples before the digital phase correction. In an embodiment, the pre-processing may be one or more of matched filtering, frequency offset compensation or other processing.

The phase correction of the pre-processed quantum samples is performed by digital phase correction block 885. Substantially, the quantum sample

$$Q[n] = QI[n] + iQ$$

Q[n] is corrected to

$$Q'[n] = Q[n] \exp(-i\varphi[n]),$$

where $\varphi[n]$ is the sampled phase S860 of the extracted pilot signal.

After phase correction, the quantum samples are ready to be demodulated by demodulator 890 to generate the raw key signal S890.

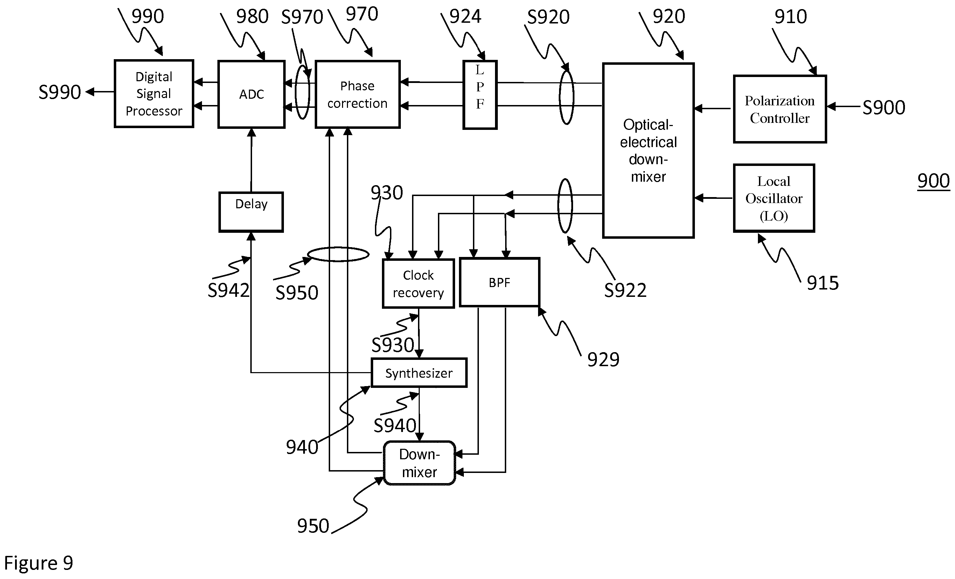

Fig. 9 shows a block diagram of a receiver 900 for receiving an optical signal S900 according to another embodiment of the invention. The optical signal S900 may be the signal generated by transmitter 100 and comprises a quantum signal and a pilot signal. The pilot signal may be modulated by a clock signal and possibly modulated by one or more further signals. The pilot signal is frequency-separated from the quantum signal. Both the pilot signal and the quantum signal were passed through the same fiber. Therefore, the quantum signal and the pilot signal have the same random phase shift caused by the mismatch between the local oscillator (laser) of the transmitter 100 and the receiver 900 of the QKD communication link. The phase shift can therefore be extracted from the pilot signal.

Unlike receivers 400 and 800, receiver 900 performs analog phase correction of the quantum signal. The phase corrected quantum signal is then sampled and further processed. This has the advantage of offloading the task from the DSP to analog devices to achieve higher data throughput.

In more detail, a received signal S900 passes a polarization controller 910. The polarization controller aligns the polarization between the local oscillator 915 and the received optical signal S900. The output of the polarization controller 910 is received by an optical-electrical downmixer and is downmixed based on signal generated by a local oscillator 915.

Optical downmixer 920 corresponds to optical downmixer 420 and 920 and outputs the extracted quantum signal S920 and the extracted pilot signal S922, which are complex signals.

From the extracted pilot signal S922 a clock signal S930 is recovered by clock recovery circuit 930. In an embodiment, clock recovery circuit 930 may be an analog clock recovery circuit as used in receivers 400 and 800. The recovered clock signal S930 corresponds to the clock signal that has been used to generate the pilot signal at the transmitter. The signal S930 is used as input signal for a synthesizer 950. Synthesizer 950 generates two output signals S940, S942. The frequency of signal S940 corresponds to the frequency of the pilot signal and signal S942 corresponds to the clock signal of the transmitter. Signal S940 is also referred to as a reference signal for the extracted pilot signal S922. Signal S942 is also referred to as the extracted clock signal. The pilot signal may have a frequency that is an integer multiple of the frequency of the clock signal. In a particular embodiment, the pilot signal may have a frequency of 800MHz and the clock signal may have a frequency of around 100 MHz.

The downmixer 950 mixes a filtered version of the extracted pilot signal S922 with signal S940. In particular downmixer mixes each of the I component and the Q component of the filtered version of the extracted pilot signal S922 with each of the I component and the Q component of signal S940.

The resulting signal is a noise-like complex baseband signal representing the phase S950. The phase S950 is used by phase correction block 970, which performs phase correction of a filtered version of the extracted quantum signal S920. The filtered version of the extracted quantum signal is the output of low pass filter 924, which removes unwanted frequency components.

The extracted clock signal S942 is the basis for sampling the phase corrected quantum signal S970 at analog-digital converter 980. The extracted clock signal S942 is delayed by a delay stage such that optimized acquisition timing is selected. The delay of delay stage may be statistically calibrated. In an embodiment, there may be no need for a dynamic tuning.

The sampled phase corrected quantum signal is further processed by a digital signal processor (DSP) 990, which demodulates the quantum samples and outputs the raw key signal S990.

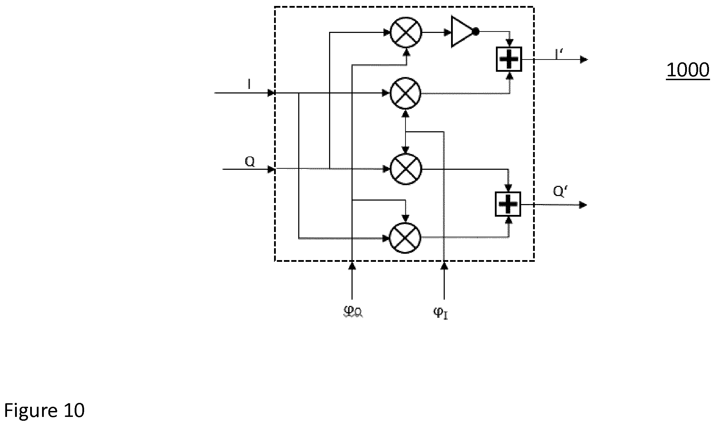

Fig. 10 shows an analog phase correction circuit 1000. The analog phase correction circuit 1000 receives a complex signal I, Q and a complex phase $\varphi_I$ and $\varphi_Q$. The output of analog phase correction circuit 1000 is a complex signal I', Q'.

$$I' = I * \varphi_I - Q * \varphi_Q,$$

$$Q' = Q * \varphi_I + I * \varphi_Q.$$

The multiplications are implemented as conventional mixers.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims, and are contemplated to cover any and all modifications, variations, combinations or equivalents that fall within the scope of the invention.

## Claims

1. A transmitter (100) configured to generate an optical signal (S150) which comprises a quantum signal, the transmitter comprising opto-electronic circuitry configured to generate the optical signal (S150) by:

   generating a quantum signal (S110);
   generating a pilot signal (S120), wherein the pilot signal (S120) is modulated by a clock signal; and
   modulating an optical carrier (S140) based on the quantum signal (S110) and the pilot signal (S120);
   wherein the pilot signal (S120) is a single-frequency tone signal that is amplitude-modulated by the clock signal; and
   wherein the pilot signal (S220) is a single-frequency signal with a frequency that is an integer multiple of the frequency of the clock signal;
   wherein the clock signal is a continuous stable jitter-free clock frequency.

2. A method for providing an optical signal (S150) for transmitting a quantum signal, comprising:

   generating a quantum signal (S110);
   generating a pilot signal (S120), the pilot signal (S120) being modulated by a clock signal; and
   modulating an optical carrier (S140) based on the pilot signal (S120) and the quantum signal (S110) for providing the optical signal (S150);
   wherein the pilot signal (S120) is a single-frequency tone signal that is amplitude-modulated by the clock signal; and
   wherein the pilot signal (S220) is a single-frequency signal with a frequency that is an integer multiple of the frequency of the clock signal;
   wherein the clock signal is a continuous stable jitter-free clock frequency.

3. A receiver (400, 800, 900) configured to receive an optical signal (S400, S800, S900) comprising a quantum signal (S210) and a pilot signal (S220), wherein the pilot signal (S220) is modulated by a clock signal;
   wherein the receiver (400, 800, 900) comprises opto-electronic circuitry configured to:

   extract (420, 820, 920) the quantum signal (S210) and the pilot signal (S220) from the optical signal (S400, S800, S900);
   extract (430, 435, 440, 830, 930) the clock signal from the extracted pilot signal (S422, S822, S922); and
   phase-correct (485, 885, 970) the extracted quantum signal (S420, S820, S920) based on the extracted clock signal (S430, S830, S930) and the extracted pilot signal (S422, S822, S922);
   wherein the pilot signal (S120) is a single-frequency tone signal that is amplitude-modulated by the clock signal; and
   wherein the pilot signal (S220) is a single-frequency signal with a frequency that is an integer multiple of the frequency of the clock signal;

wherein the clock signal is a continuous stable jitter-free clock frequency.

4. The receiver (400, 800, 900) according to claim 3, wherein the pilot signal is a single-frequency signal and the opto-electronic circuitry is configured to phase-correct the extracted quantum signal (S420, S820, S920) based on the extracted clock signal (S430, S830, S930) and the phase of the extracted pilot signal (S422, S822, S922).

5. The receiver (400) according to claim 4, wherein the opto-electronic circuitry is configured to
down-sample (460) the extracted pilot signal (S422) based on the extracted clock signal (S430); sample (470) the extracted quantum signal (S420) based on the extracted clock (S430) signal, and phase-correct (485) the sampled quantum signal (S470) based on the sampled pilot signal (S460).

6. The receiver (800) according to claim 4, wherein the opto-electronic circuitry is configured to

sample a phase difference (S856) between the extracted pilot signal (S822) and a reference signal (S850) based on the extracted clock signal (S830), and
generate a reference signal (S850) based on the extracted clock signal (S830), wherein a phase of the reference signal (S850) is locked to a phase of the extracted clock signal (S830); and phase-correct the extracted quantum signal (S820) by
sampling (870) the extracted quantum signal (S420) based on the extracted clock signal (S830), and
phase-correcting (885) the sampled quantum signal based on the sampled phase difference (S860).

7. The receiver (900) according to claim 4, wherein the opto-electronic circuitry is configured to

generate a reference signal (S940) based on the extracted clock signal (S930), the reference signal (S950) having a same frequency as the pilot signal;
down-convert each of an I component and a Q component of the extracted pilot signal (S922) by mixing each of the I component and the Q component with the reference signal (S940); and
phase-correct the extracted quantum signal (S920) based on the down-converted I component and the down-converted Q component (S950).

8. The receiver (400, 800, 900) according to any of claims 3 to 7, wherein the opto-electronic circuitry is configured to extract the clock signal (S930) by demodulating (430, 830, 930) the pilot signal and low pass filtering (435) the demodulated pilot signal.

9. The receiver (400, 800, 900) according to claim 8, wherein the opto-electronic circuitry is configured to demodulate (430, 830, 930) the pilot signal by amplitude-demodulating the pilot signal.

10. The receiver (400, 800, 900) according to any of claims 3 to 9, wherein the opto-electronic circuitry is further configured to reduce (450, 850, 940) jitter of the extracted clock signal (S450, S852, S940).

11. A method for receiving an optical signal (S400, S800, S900) comprising a quantum signal (S210) and a pilot signal (S220), wherein the pilot signal (S220) is modulated by a clock signal, wherein the method comprises:

extracting the quantum signal (S210) and the pilot signal (S220) from the optical signal (S400, S800, S900);
extracting the clock signal from the extracted pilot signal (S422, S822, S922); and
phase-correcting the extracted quantum signal (S420, S820, S920) based on the extracted clock signal (S430, S830, S930) and the extracted pilot signal (S422, S822, S922);
wherein the pilot signal (S120) is a single-frequency tone signal that is amplitude-modulated by the clock signal; and
wherein the pilot signal (S220) is a single-frequency signal with a frequency that is an integer multiple of the frequency of the clock signal;
wherein the clock signal is a continuous stable jitter-free clock frequency.

12. A computer program product comprising a program code for instructing a transmitter to perform the method according to claims 2 or instructing a receiver to perform the method according to claim 11 when the computer program runs on a computing device.

**Patentansprüche**

1. Sender (100), der dazu konfiguriert ist, ein optisches Signal (S150) zu erzeugen, welches ein Quantensignal umfasst, wobei der Sender eine optoelektronische Schaltung umfasst, die dazu konfiguriert ist, das optische Signal (S150) durch Folgendes zu erzeugen:

Erzeugen eines Quantensignals (S110);
Erzeugen eines Pilotsignals (S120), wobei das Pilotsignal (S120) durch ein Taktsignal moduliert wird; und
Modulieren eines optischen Trägers (S140) basierend auf dem Quantensignal (S110) und dem Pilotsignal (S120);
wobei das Pilotsignal (S120) ein Tonsignal mit Einzelfrequenz ist, das durch das Taktsignal amplitudenmoduliert wird; und
wobei das Pilotsignal (S220) ein Einzelfrequenzsignal mit einer Frequenz ist, die ein ganzzahliges Vielfaches der Frequenz des Taktsignals ist;
wobei das Taktsignal eine kontinuierlich stabile, jitterfreie Taktfrequenz ist.

2.  Verfahren zum Bereitstellen eines optischen Signals (S150) zum Senden eines Quantensignals, umfassend:

Erzeugen eines Quantensignals (S110);
Erzeugen eines Pilotsignals (S120), wobei das Pilotsignal (S120) durch ein Taktsignal moduliert wird; und
Modulieren eines optischen Trägers (S140) basierend auf dem Pilotsignal (S120) und dem Quantensignal (S110) zum Bereitstellen des optischen Signals (S150);
wobei das Pilotsignal (S120) ein Tonsignal mit Einzelfrequenz ist, das durch das Taktsignal amplitudenmoduliert wird; und
wobei das Pilotsignal (S220) ein Einzelfrequenzsignal mit einer Frequenz ist, die ein ganzzahliges Vielfaches der Frequenz des Taktsignals ist;
wobei das Taktsignal eine kontinuierlich stabile, jitterfreie Taktfrequenz ist.

3.  Empfänger (400, 800, 900), der dazu konfiguriert ist, ein optisches Signal (S400, S800, S900) umfassend ein Quantensignal (S210) und ein Pilotsignal (S220) zu empfangen, wobei das Pilotsignal (S220) durch ein Taktsignal moduliert wird;
wobei der Empfänger (400, 800, 900) eine optoelektronische Schaltung umfasst, die dazu konfiguriert ist:

das Quantensignals (S210) und das Pilotsignal (S220) aus dem optischen Signal (S400, S800, S900) zu extrahieren (420, 820, 920) ;
das Taktsignal aus dem extrahierten Pilotsignal (S422, S822, S922) zu extrahieren (430, 435, 440, 830, 930); und
das extrahierte Quantensignal (S420, S820, S920) basierend auf dem extrahierten Taktsignal (S430, S830, S930) und dem extrahierten Pilotsignal (S422, S822, S922) einer Phasenkorrektur zu unterziehen(485, 885, 970);
wobei das Pilotsignal (S120) ein Tonsignal mit Einzelfrequenz ist, das durch das Taktsignal amplitudenmoduliert wird; und
wobei das Pilotsignal (S220) ein Einzelfrequenzsignal mit einer Frequenz ist, die ein ganzzahliges Vielfaches der Frequenz des Taktsignals ist;
wobei das Taktsignal eine kontinuierlich stabile, jitterfreie Taktfrequenz ist.

4.  Empfänger (400, 800, 900) nach Anspruch 3, wobei das Pilotsignal ein Einzelfrequenzsignal ist und die optoelektronische Schaltung dazu konfiguriert ist, das extrahierte Quantensignal (S420, S820, S920) basierend auf dem extrahierten Taktsignal (S430, S830, S930) und der Phase des extrahierten Pilotsignals (S422, S822, S922) einer Phasenkorrektur zu unterziehen.

5.  Empfänger (400) nach Anspruch 4, wobei die optoelektronische Schaltung dazu konfiguriert ist:

das extrahierte Pilotsignal (S422) basierend auf dem extrahierten Taktsignal (S430) abwärts abzutasten (460);
das extrahierte Quantensignal (S420) basierend auf dem extrahierten Taktsignal (S430) abzutasten (470), und
das abgetastete Quantensignal (S470) basierend auf dem abgetasteten Pilotsignal (S460) einer Phasenkorrektur zu unterziehen (485).

6.  Empfänger (800) nach Anspruch 4, wobei die optoelektronische Schaltung dazu konfiguriert ist:

eine Phasendifferenz (S856) zwischen dem extrahierten Pilotsignal (S822) und einem Referenzsignal (S850) basierend auf dem extrahierten Taktsignal (S830) abzutasten, und
ein Referenzsignal (S850) basierend auf dem extrahierten Taktsignal (S830) zu erzeugen, wobei eine Phase des Referenzsignals (S850) mit einer Phase des extrahierten Taktsignals (S830) verriegelt ist; und
das extrahierte Quantensignal (S820) einer Phasenkorrektur zu unterziehen, durch Abtasten (870) des extrahierten Quantensignals (S420) basierend auf dem extrahierten Taktsignal (S830), und
Phasenkorrigieren (885) des abgetasteten Quantensignals basierend auf der abgetasteten Phasendifferenz (S860).

7.  Empfänger (900) nach Anspruch 4, wobei die optoelektronische Schaltung dazu konfiguriert ist:

ein Referenzsignal (S940) basierend auf dem extrahierten Taktsignal (S930) zu erzeugen, wobei das Referenzsignal (S950) dieselbe Frequenz wie das Pilotsignal aufweist;

jede von einer I-Komponente und einer Q-Komponente des extrahierten Pilotsignals (S922) durch Mischen jeder von der I-Komponente und der Q-Komponente mit dem Referenzsignal (S940) abwärts zu konvertieren; und

das extrahierte Quantensignal (S920) basierend auf der abwärts konvertierten I-Komponente und der abwärts konvertierten Q-Komponente (S950) einer Phasenkorrektur zu unterziehen.

8. Empfänger (400, 800, 900) nach einem der Ansprüche 3 bis 7, wobei die optoelektronische Schaltung dazu konfiguriert ist, das Taktsignal (S930) durch Demodulieren (430, 830, 930) des Pilotsignals und Tiefpassfiltern (435) des demodulierten Pilotsignals zu extrahieren.

9. Empfänger (400, 800, 900) nach Anspruch 8, wobei die optoelektronische Schaltung dazu konfiguriert ist, das Pilotsignal durch Amplitudendemodulieren des Pilotsignals zu demodulieren (430, 830, 930).

10. Empfänger (400, 800, 900) nach einem der Ansprüche 3 bis 9, wobei die optoelektronische Schaltung ferner dazu konfiguriert ist, den Jitter des extrahierten Taktsignals (S450, S852, S940) zu reduzieren (450, 850, 940).

11. Verfahren zum Empfangen eines optischen Signals (S400, S800, S900), das ein Quantensignal (S210) und ein Pilotsignal (S220) umfasst, wobei das Pilotsignal (S220) durch ein Taktsignal moduliert wird, wobei das Verfahren Folgendes umfasst:

Extrahieren des Quantensignals (S210) und des Pilotsignals (S220) aus dem optischen Signal (S400, S800, S900);
Extrahieren des Taktsignals aus dem extrahierten Pilotsignal (S422, S822, S922); und
Phasenkorrigieren des extrahierten Quantensignals (S420, S820, S920) basierend auf dem extrahierten Taktsignal (S430, S830, S930) und dem extrahierten Pilotsignal (S422, S822, S922);
wobei das Pilotsignal (S120) ein Tonsignal mit Einzelfrequenz ist, das durch das Taktsignal amplitudenmoduliert wird; und
wobei das Pilotsignal (S220) ein Einzelfrequenzsignal mit einer Frequenz ist, die ein ganzzahliges Vielfaches der Frequenz des Taktsignals ist;
wobei das Taktsignal eine kontinuierlich stabile, jitterfreie Taktfrequenz ist.

12. Computerprogrammprodukt, umfassend einen Programmcode zum Anweisen eines Senders, das Verfahren nach Anspruch 2 durchzuführen, oder Anweisen eines Empfängers, das Verfahren nach Anspruch 11 durchzuführen, wenn das Computerprogramm auf einer Rechenvorrichtung ausgeführt wird.

**Revendications**

1. Émetteur (100) configuré pour générer un signal optique (S150) qui comprend un signal quantique, l'émetteur comprenant un circuit optoélectronique configuré pour générer le signal optique (S150) par :

la génération d'un signal quantique (S110) ;
la génération d'un signal pilote (S120), dans lequel le signal pilote (S120) est modulé par un signal d'horloge ; et
la modulation d'une porteuse optique (S140) sur la base du signal quantique (S110) et du signal pilote (S120) ;
dans lequel le signal pilote (S120) est un signal de tonalité à fréquence unique qui est modulé en amplitude par le signal d'horloge ; et
dans lequel le signal pilote (S220) est un signal à fréquence unique avec une fréquence qui est un multiple entier de la fréquence du signal d'horloge ;
dans lequel le signal d'horloge est une fréquence d'horloge continue, stable et sans gigue.

2. Procédé pour la fourniture d'un signal optique (S150) pour transmettre un signal quantique, comprenant :

la génération d'un signal quantique (S110) ;
la génération d'un signal pilote (S120), le signal pilote (S120) étant modulé par un signal d'horloge ; et
la modulation d'une porteuse optique (S140) sur la base du signal pilote (S120) et du signal quantique (S110) pour fournir le signal optique (S150) ;
dans lequel le signal pilote (S120) est un signal de tonalité à fréquence unique qui est modulé en amplitude par le signal d'horloge ; et
dans lequel le signal pilote (S220) est un signal à fréquence unique avec une fréquence qui est un multiple entier de la fréquence du signal d'horloge ;
dans lequel le signal d'horloge est une fréquence d'horloge continue, stable et sans gigue.

3. Récepteur (400, 800, 900) configuré pour recevoir un signal optique (S400, S800, S900) comprenant un signal quantique (S210) et un signal pilote (S220), dans lequel le signal pilote (S220) est modulé par un signal d'horloge ;

dans lequel le récepteur (400, 800, 900) comprend un circuit optoélectronique configuré pour :

> extraire (420, 820, 920) le signal quantique (S210) et le signal pilote (S220) du signal optique (S400, S800, S900) ;
>
> extraire (430, 435, 440, 830, 930) le signal d'horloge du signal pilote extrait (S422, S822, S922) ; et
>
> corriger la phase (485, 885, 970) du signal quantique extrait (S420, S820, S920) sur la base du signal d'horloge extrait (S430, S830, S930) et du signal pilote extrait (S422, S822, S922) ;
>
> dans lequel le signal pilote (S120) est un signal de tonalité à fréquence unique qui est modulé en amplitude par le signal d'horloge ; et
>
> dans lequel le signal pilote (S220) est un signal à fréquence unique avec une fréquence qui est un multiple entier de la fréquence du signal d'horloge ;
>
> dans lequel le signal d'horloge est une fréquence d'horloge continue, stable et sans gigue.

4. Récepteur (400, 800, 900) selon la revendication 3, dans lequel le signal pilote est un signal à fréquence unique et le circuit optoélectronique est configuré pour corriger la phase du signal quantique extrait (S420, S820, S920) sur la base du signal d'horloge extrait (S430, S830, S930) et de la phase du signal pilote extrait (S422, S822, S922).

5. Récepteur (400) selon la revendication 4, dans lequel le circuit optoélectronique est configuré pour sous-échantillonner (460) le signal pilote extrait (S422) sur la base du signal d'horloge extrait (S430) ; échantillonner (470) le signal quantique extrait (S420) sur la base du signal d'horloge extrait (S430), et corriger la phase (485) du signal quantique échantillonné (S470) sur la base du signal pilote échantillonné (S460) .

6. Récepteur (800) selon la revendication 4, dans lequel le circuit optoélectronique est configuré pour échantillonner une différence de phase (S856) entre le signal pilote extrait (S822) et un signal de référence (S850) sur la base du signal d'horloge extrait (S830), et

> générer un signal de référence (S850) sur la base du signal d'horloge extrait (S830), dans lequel une phase du signal de référence (S850) est verrouillée sur une phase du signal d'horloge extrait (S830) ; et
>
> corriger la phase du signal quantique extrait (S820) en échantillonnant (870) le signal quantique extrait (S420) sur la base du signal d'horloge extrait (S830), et

en corrigeant la phase (885) du signal quantique échantillonné sur la base de la différence de phase échantillonnée (S860).

7. Récepteur (900) selon la revendication 4, dans lequel le circuit optoélectronique est configuré pour générer un signal de référence (S940) sur la base du signal d'horloge extrait (S930), le signal de référence (S950) ayant une même fréquence que le signal pilote ;

convertir vers le bas chacune d'une composante I et d'une composante Q du signal pilote extrait (S922) en mélangeant chacune de la composante I et de la composante Q avec le signal de référence (S940) ; et corriger la phase du signal quantique extrait (S920) sur la base de la composante I convertie vers le bas et de la composante Q convertie vers le bas (S950).

8. Récepteur (400, 800, 900) selon l'une quelconque des revendications 3 à 7, dans lequel le circuit optoélectronique est configuré pour extraire le signal d'horloge (S930) en démodulant (430, 830, 930) le signal pilote et en filtrant passe-bas (435) le signal pilote démodulé.

9. Récepteur (400, 800, 900) selon la revendication 8, dans lequel le circuit optoélectronique est configuré pour démoduler (430, 830, 930) le signal pilote en démodulant l'amplitude du signal pilote.

10. Récepteur (400, 800, 900) selon l'une quelconque des revendications 3 à 9, dans lequel le circuit optoélectronique est également configuré pour réduire (450, 850, 940) la gigue du signal d'horloge extrait (S450, S852, S940).

11. Procédé de réception d'un signal optique (S400, S800, S900) comprenant un signal quantique (S210) et un signal pilote (S220), dans lequel le signal pilote (S220) est modulé par un signal d'horloge, dans lequel le procédé comprend :

> l'extraction du signal quantique (S210) et du signal pilote (S220) provenant du signal optique (S400, S800, S900) ;
>
> l'extraction du signal d'horloge provenant du signal pilote extrait (S422, S822, S922) ; et
>
> la correction de phase du signal quantique extrait (S420, S820, S920) sur la base du signal d'horloge extrait (S430, S830, S930) et du signal pilote extrait (S422, S822, S922) ;
>
> dans lequel le signal pilote (S120) est un signal de tonalité à fréquence unique qui est modulé en amplitude par le signal d'horloge ; et
>
> dans lequel le signal pilote (S220) est un signal à fréquence unique avec une fréquence qui est un multiple entier de la fréquence du signal d'horloge ;

dans lequel le signal d'horloge est une fréquence d'horloge continue, stable et sans gigue.

12. Produit de programme informatique comprenant un code de programme pour ordonner à un émetteur de réaliser le procédé selon la revendication 2 ou ordonner au récepteur de réaliser le procédé selon la revendication 11 lorsque le programme informatique fonctionne sur un dispositif informatique.

100

Figure 1

200

S120

S110

Figure 2

300

Figure 3

Figure 4

Figure 5

EP 3 791 532 B1

Figure 6

Figure 7

EP 3 791 532 B1

Figure 8

Figure 9

1000

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F LAUDENBACH et al.** *Pilot-Disciplined CV-QKD with True Local Oscillator*, 01 January 2017
- **FABIAN LAUDENBACH et al.** Pilot-assisted intra-dyne reception for high-speed continuousvariable quantum key distribution with true local oscillator. *Arxiv*, 29 December 2017
- High-Rate Continuous-Variables Quantum Key Distribution with Piloted-Disciplined Local Oscillator. **SCHRENK B et al.** 2017 EUROPEAN CONFERENCE ON OPTICAL COMMUNICATION (ECOC). IEEE, 17 September 2017, 1-3

- Quantum Key Distribution (QKD); Components and Internal Interfaces. *ETSI DRAFT SPECIFICATION; QKD 003, EUROPEAN ELECOMMUNICATIONS STANDARDS INSTITUTE (ETSI), 650, ROUTE DES LUCIOLES; F-06921 SOPHIA-ANTIPOLIS*, 04 June 2017, vol. ISG QKD Quantum Key Distribution (V0.0.3), 1-49